# EUROPÄISCHE PATENTSCHRIFT

(11) **EP 1 442 945 B1**
(45) Veröffentlichungstag und Bekanntmachung des Hinweises auf die Patenterteilung: **14.12.2005**
(21) Anmeldenummer: 04001190.0
(22) Anmeldetag: 21.01.2004
(51) Int. Cl.: B60R 21/20, B60R 21/16

(54) **Fahrergassackmodul**
Driver airbag module
Module de sac gonflable pour un conducteur

(30) Priorität: 31.01.2003 DE 20301521 U
(43) Veröffentlichungstag der Anmeldung: 04.08.2004
(73) Patentinhaber: TRW Automotive Safety Systems GmbH, 63743 Aschaffenburg (DE)
(72) Erfinder: Kadri, Aygün, 63739 Aschaffenburg (DE); Bohn, Stefan, 63773 Goldbach (DE); Haese, Lutz, 63739 Aschaffenburg (DE); Deisel, Andreas, 63934 Röllbach (DE)
(74) Vertreter: Strass, Jürgen

(56) Entgegenhaltungen:
- DE-A- 19 816 080
- DE-A- 19 860 804

## Beschreibung

Die Erfindung betrifft ein Fahrergassackmodul, mit einem Gassack, der eine, bezogen auf den aufgeblasenen Zustand, Vorderwand aufweist, die dem Fahrer zugewandt ist und deren Mittenabschnitt im aufgeblasenen Zustand eine Einbuchtung aufweist, indem der Mittenabschnitt wenigstens teilweise an einer Bewegung in Richtung aus dem Gassackmodul heraus gehindert wird.

Bei solchen Gassackmodulen, die beispielsweise aus der EP-A-1 115 926 bekannt sind, ist der Gassack üblicherweise ringförmig. Die Vorderwand ist dabei diejenige Wand des Gassacks, die im aufgeblasenen Zustand zum Fahrer gerichtet ist und auf die der Fahrer prallen kann. Der Mittenabschnitt ist üblicherweise das Zentrum der Vorderwand, das wenigstens zu Beginn der Entfaltung am Gassackmodul befestigt bleibt, so daß sich im aufgeblasenen Zustand die bereits erwähnte Ringform des Gassacks bildet. Aufgrund dieser Ringform tritt der Gassack schräg nach außen aus dem im Lenkrad des Fahrzeugs untergebrachten Modul aus, erst anschließend bewegt sich die Vorderwand in Richtung zum Fahrer.

Auch für den Fall eines frühzeitigen Auftreffens des Fahrers auf den sich noch entfaltenden Gassack oder bei einer Beeinflussung der Entfaltung durch ein Hindernis wird eine für den Fahrer optimale Schutzwirkung angestrebt. Bei herkömmlichen Gassackmodulen mit einem ringförmigen Gassack wird eine gezielte Entfaltung durch eine aufwendige Vorfaltung des Gassacks unterstützt.

Die DE-A-198 16 080 zeigt ein Beifahrergassackmodul mit einem Gassack, der von zwei nebeneinander angeordneten Gasgeneratoren aufgeblasen wird. Im aufgeblasenen Zustand sind in der Vorderwand des Gassacks zwei Einbuchtungen gebildet, wobei der Außenrand der Vorderwand vier gerade Abschnitte aufweist. Ein Modul mit einem solchen Aufbau ist aber nicht als Fahrergassackmodul geeignet.

Die Erfindung schafft ein einfacher und kostengünstiger herzustellendes Fahrergassackmodul, bei dem auch unter nicht-optimalen Entfaltungsbedingungen ein verbesserter Schutz für den Fahrer erreicht wird.

Gemäß der Erfindung ist bei einem Fahrergassackmodul der eingangs genannten Art vorgesehen, daß die Vorderwand, bezogen auf das Zentrum der Einbuchtung, einen oberen und einen unteren Bereich aufweist, wobei der Außenrand des oberen Bereichs drei im wesentlichen gerade Abschnitte aufweist. Im Gegensatz zur üblichen Ringform des Gassacks bei gattungsgemäßen Fahrergassackmodulen sieht die Erfindung eine "eckige" Kontur des oberen Bereichs der Vorderwand des Gassacks vor, die eine Abstützung des Gassacks am Kranz des Lenkrads des Fahrzeugs während der Entfaltung unterstützt. Durch die besondere Geometrie des oberen Bereichs wird somit ein unter ungünstigen Bedingungen mögliches Eintauchen des Gassacks hinter den Lenkradkranz während der Entfaltung vermieden, ohne daß eine Vorfaltung des Gassacks erforderlich ist. Der Wegfall der Vorfaltung führt allgemein zu einer größeren Prozeßsicherheit bei der Herstellung des Gassackmoduls. Zudem kann die Taktzeit beim Faltprozeß des Gassacks verkürzt werden.

Vorteilhafte Ausgestaltungen des erfindungsgemäßen Fahrergassackmoduls sind in den Unteransprüchen angegeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1a eine Seitenansicht eines erfindungsgemäßen Fahrergassackmoduls mit aufgeblasenem Gassack gemäß einer ersten Ausführungsform;
- Figur 1b eine Draufsicht auf das Fahrergassackmodul aus Figur 1a; und
- Figur 2 eine Draufsicht auf ein erfindungsgemäßes Fahrergassackmodul mit aufgeblasenem Gassack gemäß einer zweiten Ausführungsform.

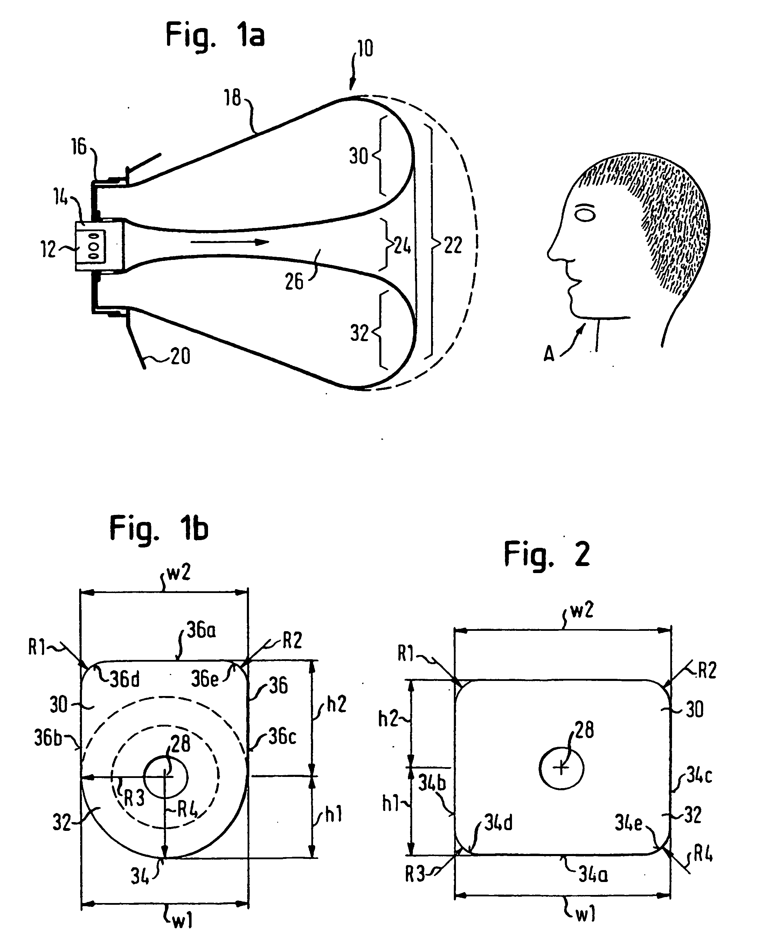

Das in Figur 1a dargestellte Gassackmodul 10 ist im Lenkrad eines Fahrzeugs untergebracht. Das Gassackmodul 10 weist einen Gasgenerator 12 auf, um den herum ein Halteteil in Form eines Diffusors 14 angeordnet ist. Der Diffusor 14 ist wiederum zusammen mit dem Gasgenerator 12 am Gehäuse 16 des Gassackmoduls 10 arretiert. Zwischen dem Diffusor 14 und der Außenwand des Gehäuses ist ein Ringraum gebildet, in dem ein ohne Vorfaltung zusammengelegter Gassack 18 untergebracht ist. Eine Abdeckklappe 20 verschließt das Gassackmodul 10 im nicht-entfalteten Zustand des Gassacks 18 und wird beim Entfalten nach außen geschwenkt.

Der Gassack 18 besteht aus einer Gassackwand, die mehrere Abschnitte hat, unter anderem einen Abschnitt, der als Vorderwand 22 bezeichnet wird. Die Vorderwand 22 ist der Teil des Gassacks 18, der dem Fahrer A zugewandt ist. Die Vorderwand 22 hat einen zentrischen Abschnitt, im folgenden Mittenabschnitt 24 genannt, der einwärts in Richtung zum Diffusor 14 verläuft, also in das Innere des Gassacks 18 gerichtet ist, so daß sich eine Einbuchtung 26 ergibt.

Die in Figur 1b dargestellte Draufsicht des Gassackmoduls 10 zeigt die Form des Gassacks 18 aus der Sicht des Fahrers A. Die Vorderwand 22 läßt sich in einen Bereich oberhalb des Zentrums 28 der Einbuchtung 26 (oberer Bereich 30) und einen Bereich unterhalb des Zentrums 28 (unterer Bereich 32) unterteilen, wobei der untere Bereich 32 anders geformt ist als der obere Bereich 30. Während der untere Bereich 32 im wesentlichen die Form eines Ringabschnitts mit einem runden Außenrand 34 hat, weist der Außenrand 36 des oberen Bereichs 30 drei im wesentlichen gerade, durch zwei gekrümmte Übergangsabschnitte 36d, 36e verbundene Abschnitte 36a, 36b, 36c auf. Die Radien R1, R2 der gekrümmten Übergangsabschnitte 36d, 36e sind wesentlich kleiner als die Radien R3, R4, die die Krümmung des Außenrands 34 des unteren Bereichs 32 bestimmen, und somit wesentlich kleiner als der Abstand der gekrümmten Übergangsabschnitte 36d, 36e vom Zentrum 28 der Einbuchtung 26. Dadurch erhält der obere Bereich 30 der Vorderwand 22 eine vergleichsweise "eckige" Form.

Bei der beispielhaft dargestellten Ausführungsform der Figuren 1a und 1b ist die horizontale Breite w1 (quer zur Fahrzeuglängsrichtung) des unteren Bereichs 32 gleich der Breite w2 des oberen Bereichs 30, und die vertikale Höhe h1 des unteren Bereichs 32 ist kleiner als die Höhe h2 des oberen Bereichs 30. Bei alternativen Ausführungsformen kann aber die Breite w2 des oberen Bereichs größer als die Breite w1 des unteren Bereichs und/oder die Höhen h1, h2 der beiden Bereiche 30, 32 gleich sein.

Die in Figur 2 gezeigte Ausführungsform unterscheidet sich von der zuvor beschriebenen Ausführungsform dadurch, daß auch der untere Bereich 32 eine "eckige" Form hat, so daß sich insgesamt eine rechteckige Form der Vorderwand 22 ergibt. Der Außenrand 34 des unteren Bereichs 32 läßt sich analog zum Außenrand 36 des oberen Bereichs 30 in drei im wesentlichen gerade Abschnitte 34a, 34b, 34c und zwei gekrümmte Übergangsabschnitte 34d, 34e mit Krümmungsradien R3 bzw. R4 unterteilen.

Beiden dargestellten Ausführungsformen ist gemein, daß insbesondere der "eckige" obere Bereich 30 der Vorderwand 22 eine Abstützung des Gassacks 18 am Lenkradkranz bei der Entfaltung unterstützt und somit ein Eintauchen hinter den Lenkradkranz verhindert.

## Patentansprüche

1. Fahrergassackmodul, mit einem Gassack (18), der eine, bezogen auf den aufgeblasenen Zustand, Vorderwand (22) aufweist, die dem Fahrer (A) zugewandt ist und deren Mittenabschnitt (24) im aufgeblasenen Zustand eine Einbuchtung (26) aufweist, indem der Mittenabschnitt (24) wenigstens teilweise an einer Bewegung in Richtung aus dem Gassackmodul (10) heraus gehindert wird, **dadurch gekennzeichnet, daß** die Vorderwand (22), bezogen auf das Zentrum (28) der Einbuchtung (26), einen oberen Bereich (30) und einen unteren Bereich (32) aufweist, wobei der Außenrand (36) des oberen Bereichs (30) drei im wesentlichen gerade Abschnitte (36a, 36b, 36c) aufweist.

2. Fahrergassackmodul nach Anspruch 1, **dadurch gekennzeichnet, daß** die drei geraden Abschnitte (36a, 36b, 36c) des Außenrands (36) des oberen Bereichs (30) durch gekrümmte Übergangsabschnitte (36d, 36e) miteinander verbunden sind, deren Radien (R1, R2) wesentlich kleiner sind als ihr Abstand vom Zentrum (28) der Einbuchtung (26).

3. Fahrergassackmodul nach Anspruch 1 oder 2, **dadurch gekennzeichnet, daß** die horizontale Breite (w2) des oberen Bereichs (30) größer oder gleich der horizontalen Breite (w1) des unteren Bereichs (32) ist.

4. Fahrergassackmodul nach einem der vorhergehenden Ansprüche, **dadurch gekennzeichnet, daß** die vertikale Höhe (h2) des oberen Bereichs (30) größer oder gleich der vertikalen Höhe (h1) des unteren Bereichs (32) ist.

5. Fahrergassackmodul nach einem der vorhergehenden Ansprüche, **dadurch gekennzeichnet, daß** der Außenrand (34) des unteren Bereichs (32) eine kontinuierliche Krümmung aufweist, die durch wenigstens einen Radius (R3, R4) definiert ist, der im wesentlichen dem Abstand des Außenrands (34) vom Zentrum (28) der Einbuchtung (26) entspricht.

6. Fahrergassackmodul nach einem der Ansprüche 1 bis 4, **dadurch gekennzeichnet, daß** auch der Außenrand (34) des unteren Bereichs (32) drei im wesentlichen gerade Abschnitte (34a, 34b, 34c) aufweist.

7. Fahrergassackmodul nach Anspruch 6, **dadurch gekennzeichnet, daß** die drei geraden Abschnitte (34a, 34b, 34c) des unteren Bereichs (32) durch gekrümmte Übergangsabschnitte (34d, 34e) miteinander verbunden sind, deren Radien (R3, R4) wesentlich kleiner sind als ihr Abstand vom Zentrum (28) der Einbuchtung (26).

## Claims

1. A driver's gas bag module, comprising a gas bag (18) which, as related to the inflated state, has a front wall (22) facing the driver (A) and having a central section (24) which in the inflated state has an indentation (26) formed in that the central section (24) is prevented at least partly from moving in a direction out of the gas bag module (10), **characterized in that** the front wall (22), as related to the center (28) of the indentation (26), has an upper region (30) and a lower region (32), the outer edge (36) of the upper region (30) having three substantially straight sections (36a, 36b, 36c).

2. The driver's gas bag module according to Claim 1, **characterized in that** the three straight sections (36a, 36b, 36c) of the outer edge (36) of the upper region (30) are connected with each other by curved transition sections (36d, 36e), the radii (R1, R2) of which are substantially smaller than their distance from the center (28) of the indentation (26).

3. The driver's gas bag module according to Claim 1 or 2, **characterized in that** the horizontal width (w2) of the upper region (30) is greater than or equal to the horizontal width (w1) of the lower region (32).

4. The driver's gas bag module according to any of the preceding claims, **characterized in that** the vertical height (h2) of the upper region (30) is greater than or equal to the vertical height (h1) of the lower region (32).

5. The driver's gas bag module according to any of the preceding claims, **characterized in that** the outer edge (34) of the lower region (32) has a continuous curvature which is defined by at least one radius (R3, R4) substantially corresponding to the distance of the outer edge (34) from the center (28) of the indentation (26).

6. The driver's gas bag module according to any of Claims 1 to 4, **characterized in that** the outer edge (34) of the lower region (32) also has three substantially straight sections (34a, 34b, 34c).

7. The driver's gas bag module according to Claim 6, **characterized in that** the three straight sections (34a, 34b, 34c) of the lower region (32) are connected with each other by curved transition sections (34d, 34e), the radii (R3, R4) of which are substantially smaller than their distance from the center (28) of the indentation (26).

## Revendications

1. Module de coussin à gaz de conducteur, comportant un coussin à gaz (18) qui, à l'état gonflé, présente une paroi antérieure (22) qui est tournée vers le conducteur (A) et dont le tronçon médian (24) présente un creux (26) à l'état gonflé, par le fait que le tronçon médian (24) est empêché au moins partiellement de se mouvoir en direction hors du module de coussin à gaz (10), **caractérisé en ce que** la paroi antérieure (22) présente par rapport au centre (28) du creux (26) une région supérieure (30) et une région inférieure (32), le bord extérieur (36) de la région supérieure (30) présentant trois tronçons sensiblement rectilignes (36a, 36b, 36c).

2. Module de coussin à gaz de conducteur selon la revendication 1, **caractérisé en ce que** les trois tronçons rectilignes (361, 36b, 36c) du bord extérieur (36) de la région supérieure (30) sont reliés les uns aux autres par des tronçons de transition (36d, 36e) incurvés, dont les rayons (R1, R2) sont sensiblement plus petits que leur distance par rapport au centre (28) du creux (26).

3. Module de coussin à gaz de conducteur selon la revendication 1 ou 2, **caractérisé en ce que** la largeur horizontale (w2) de la région supérieure (30) est plus grande que ou égale à la largeur horizontale (w1) de la région inférieure (32).

4. Module de coussin à gaz de conducteur selon l'une des revendications précédentes, **caractérisé en ce que** la hauteur verticale (h2) de la région supérieure (30) est plus grande que ou égale à la hauteur verticale (h1) de la région inférieure (32).

5. Module de coussin à gaz de conducteur selon l'une des revendications précédentes, **caractérisé en ce que** le bord extérieure (34) de la région inférieure (32) présente une courbure continue qui est définie par au moins un rayon (R3, R4) qui correspond sensiblement à la distance entre le bord extérieur (34) et le centre (28) du creux (26).

6. Module de coussin à gaz de conducteur selon l'une des revendications 1 à 4, **caractérisé en ce que** le bord extérieur (34) de la région inférieure (32) présente aussi trois tronçons sensiblement rectilignes (34a, 34b, 34c).

7. Module de coussin à gaz de conducteur selon la revendication 6, **caractérisé en ce que** les trois tronçons rectilignes (34a, 34b, 34c) de la région inférieure (32) sont reliés les uns aux autres par des tronçons de transition (34d, 34e) incurvés dont les rayons (R3, R4) sont sensiblement plus petits que leur distance par rapport au centre (28) du creux (26).
